# EUROPÄISCHE PATENTSCHRIFT

(11) **EP 0 985 194 B1**
(45) Veröffentlichungstag und Bekanntmachung des Hinweises auf die Patenterteilung: **06.10.2004**
(21) Anmeldenummer: 98963427.4
(22) Anmeldetag: 09.11.1998
(51) Int. Cl.: G06T 11/60

(54) **VORRICHTUNG ZUR AUFTEILUNG GROSSER BILDER**
DEVICE FOR SPLITTING LARGE IMAGES
DISPOSITIF POUR DIVISER DES IMAGES DE GRANDE DIMENSION

(30) Priorität: 18.12.1997 DE 19756525
(43) Veröffentlichungstag der Anmeldung: 15.03.2000
(73) Patentinhaber: Deutsche Telekom AG, 53113 Bonn (DE)
(72) Erfinder: ERNST, Hartmut, D-83022 Rosenheim (DE)
(74) Vertreter: Flach, Dieter Dipl.-Phys.
(86) Internationale Anmeldenummer: PCT/EP1998/007134
(87) Internationale Veröffentlichungsnummer: WO 1999/033025

(56) Entgegenhaltungen:
- JP-A- 8 037 662
- US-A- 4 890 314
- US-A- 5 675 424

## Beschreibung

Die Erfindung betrifft eine Vorrichtung zur Aufteilung großer datenmäßig erfasster Bilder in mehrere Sub-Bilder und/oder deren Zusammenfassung zu größeren Bildern gemäß dem Oberbegriff des Auspruchs 1.

Bei zahlreichen Anwendungen wird heute eine zunehmend schnellere Signalverarbeitung gefordert. Als problematisch erweist sich vor allem eine schnelle Signalverarbeitung bei sehr großen Videobildern sowie die Übertragung und Speicherung derartiger Bilder. Solche hochaufgelösten Videobilder können z.B. HDTV-Bilder, gescannte Bilder, medizinische Bilder, Satellitenbilder etc. sein. Schnelle und dabei insbesondere digitale Speichersysteme, wie etwa HDTV-Rekorder, die zur Speicherung hochaufgelöster Videobilder bzw. Bildfolgen benötigt werden, sind extrem teuer, so dass viele Anwendungen derzeit am Preis scheitern. Außerdem werden bei der Verarbeitung hochaufgelöster Videobilder in Echtzeit, also schritthaltend mit der gewünschten Bildwechselfrequenz, häufig schwer erfüllbare Anforderungen an die erforderlichen Bandbreiten gestellt. Dies ist beispielsweise für Skalierung, Filterung und Datenkompression der Fall.

Zur Lösung der geschilderten Probleme könnte daran gedacht werden, hochaufgelöste Bilder zu digitalisieren und in eine Anzahl von Sub-Bilder aufzuteilen. Es hat sich aber nunmehr gezeigt, dass bei einer entsprechenden geometrischen Aufteilung der Bilder die Bildqualität im Bereich der Kanten der Sub-Bilder starke Einbußen erleidet.

Gemäß der vorveröffentlichten JP-08 037 662 A ist ein Kompressionsverfahren für Bilddatenströme bekannt geworden, welches sich mit der Erweiterung einer Anwendung des bekannten MPEG1- bzw. MPEG2-Kompressionsverfahren von Video- und/oder TV-Filmen befasst. Dabei werden insbesondere hoch aufgelöste Videobilder (beispielsweise im HDTV-Format) in mehrere Teilbereiche, beispielsweise vier, aufgeteilt, so dass sie insoweit Standard-Videobildern gleichen. Diese Bereiche können dann mit den bekannten Verfahren komprimiert und beim Empfänger wieder zu einem Hochauflösebild rekombiniert werden.

Der gemäß der vorstehenden Veröffentlichung bekannte Prozess ist aber höchst rechenintensiv und mit vertretbarem Kostenaufwand nur bedingt einsetzbar.

Aufgabe der vorliegenden Erfindung ist es von daher, eine verbesserte Vorrichtung zu schaffen, mittels der hochaufgelöste Bilder in Sub-Bilder durch einen "Separier" aufgeteilt und/oder entsprechende Sub-Bilder zu einem hochaufgelösten Bild mittels eines sogenannten "Kombinierers" zusammengefügt werden können, und dies jeweils bei hoher bis maximaler Bildqualität, also insbesondere ohne Qualitätsverluste. Dabei soll die erfindungsgemäße Vorrichtung kostengünstiger als nach dem Stand der Technik bereitstellbar sein.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Es kann als durchaus überraschend bezeichnet werden, dass mit vergleichsweise einfachen Mitteln eine deutliche Verbesserung der Bildqualität in den in Rede stehenden Anwendungsfällen erzielbar ist.

Es ist grundsätzlich bekannt, dass bei der Aufteilung und Bearbeitung von Bilddaten in Sub-Bilddaten sowie bei der Rekombination von Sub-Bildern zur Erzielung eines Gesamtbildes Artefakte entstehen. Diese Artefakte entstehen durch die in der Regel benötigte Filterung der Bilddaten.

Erfindungsgemäß ist nunmehr vorgesehen, dass die Aufteilung der Videodaten derart erfolgt, dass die die Bildqualität beeinflussenden Artefakte aus dem kritischen Bereich der Daten so verschoben werden, dass auf diese durch Artefakte an sich nachteilig beeinflussten Bilddaten bei der Rekombination der Daten zu einem Gesamtbild verzichtet werden kann, also bei der Rekombination die nachteilig beeinflussten Bilddaten nicht mehr stören können. Dies erfolgt bei einem insgesamt günstigen Aufbau oder Vorrichtung wobei die Pixelratenströme in einer Separier-Stufe in entsprechenden Schritten reduziert und in der Kombinier-Stufe wieder entsprechend erhöht werden.

In einer besonders bevorzugten Ausführungsform der Erfindung können die Sub-Bilder beim Zusammenfassen verschoben werden, um einmal der Bildung von Artefakte entgegenzuwirken, insbesondere aber auch um bestimmte bewusste Bildeffekte dadurch erzielen zu können. Dadurch kann aber vor allem auch eine Anpassung an unterschiedliche Displays vorgenommen werden.

Schließlich ist in einer Weiterbildung der Erfindung vorgesehen, dass bei der Kombination der Sub-Bilder zu einem hochaufgelösten Bild gleichzeitig eine Normwandlung durchgeführt wird, so dass Timing und Bildformat des Ausgangsbildes von dem des Eingangsbildes abweichen können.

Ferner ist es im Rahmen der Erfindung möglich, einen Verzögerungsfaktor bei der bandbegrenzenden Filterung analog einzustellen. Im Falle einer YUV (4:2:2) Verarbeitung können dadurch die Differenzen zwischen den Verzögerungszeiten im Y- und im UV-Kanal so eingestellt werden, dass sie exakt einem Vielfachen der Taktfrequenz entsprechen, und dass sie damit digital ausgeglichen werden können.

Die Erfindung lässt sich sowohl bei HDTV-Bildern wie auch bei Computer-Grafiken oder anderen hochauflösenden Standards verwenden.

Die Erfindung wird nachfolgend anhand von Zeichnungen näher erläutert. Dabei zeigen im einzelnen:
- Figur 1 :: eine schematische Übersicht über den Grundaufbau des erfindungsgemäßen Systems;
- Figur 2 :: ein Blockschaltbild einer erfindungsgemäßen Separierstufe;
- Figur 3a :: eine schematische Darstellung bezüglich der Daten-Aufteilung beispielsweise der Daten eines oberen oder unteren rechten Halbbildes ohne erfindungsgemäße Lösung;
- Figur 3b :: eine schematische Darstellung bezüglich der Daten-Aufteilung beispielsweise der Daten eines oberen oder unteren linken Halbbildes entsprechend der erfindungsgemäßen Lösung; und
- Figur 4 :: ein Blockschaltbild einer erfindungsgemäßen Kombinierstufe.

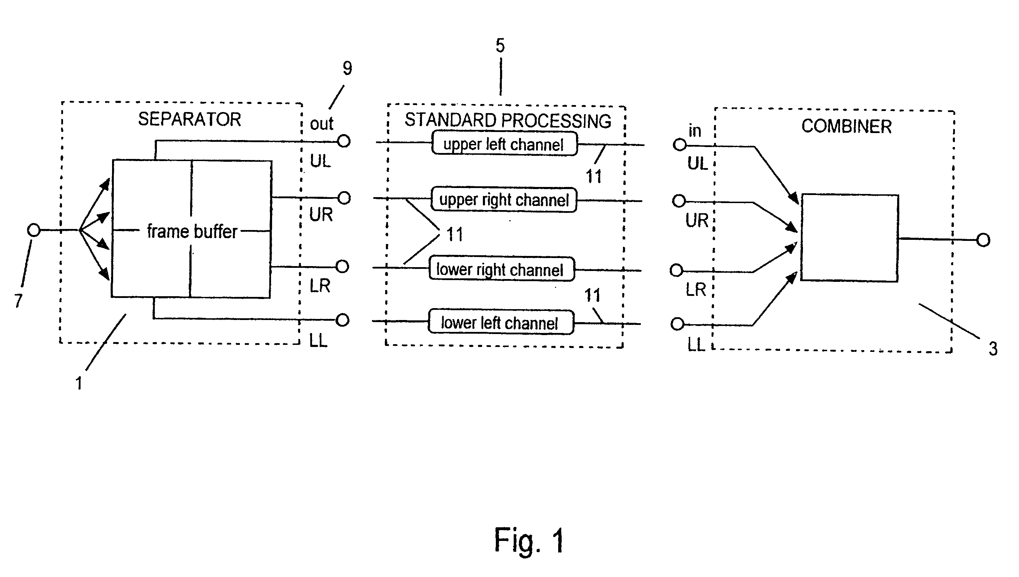

Nachfolgend wird zunächst einmal auf Figur 1 Bezug genommen, in der der Grundaufbau im Prinzip gezeigt ist.

Danach umfasst die Vorrichtung zur Aufteilung großer Videobilder in mehrere Sub-Bilder bzw. deren Zusammenfassung zu großen Bildern eine Separier-Stufe 1, eine Kombinier-Stufe 3 sowie eine zwischen beiden vorgesehene Datenverarbeitungs-Stufe 5.

Die zu separierenden und damit in kleinere Bildeinheiten zu trennenden Bilddaten werden über einen Eingang 7 der Separier-Stufe 1 zugeführt, worüber die Teilung der Daten in vier Sub-Bilder erfolgt.

Insbesondere dann, wenn die Sub-Bilder einem gängigen Standard entsprechen, beispielsweise der europäischen 625 Zeilen-Standards oder der entsprechenden japanischen bzw. amerikanischen 525 Zeilen-Standards, stehen zahlreiche preiswerte Standard-Geräte zur Weiterverarbeitung, Übertragung und Speicherung dieser Sub-Bilder zur Verfügung.

Bei dem Ausführungsbeispiel gemäß Figur 1 kann die Aufteilung in vier Sub-Bilder durchgeführt werden, was beispielsweise bei einer Verarbeitung von HDTV-Bildern in einer Auflösung von 1.152 sichtbaren Zeilen mit jeweils 1.440 Bildpunkten sinnvoll ist, da dann die Sub-Bilder exakt dem Fernseh-Standard mit 720 x 576 Bildpunkten entsprechen. Aber auch bei einer hochauflösenden Computer-Grafik mit beispielsweise 1.600 x 1.200 Bildpunkten ist eine Aufteilung in vier Sub-Bilder sinnvoll, da sich dann der Super-VGA Standard von 800 x 600 Bildpunkten für die Sub-Bilder ergibt. Das Verfahren ist jedoch prinzipiell nicht auf die Unterteilung in vier Sub-Bilder beschränkt, sondern auch bei einer beliebigen Anzahl von Sub-Bildern einsetzbar.

Über vier Ausgänge 9 der Separier-Stufe 1 stehen dann die Daten für das obere linke (UL), das obere rechte (UR), das untere rechte (LR) sowie das untere linke (LL) Teil- oder Sub-Bild an.

In der Datenverarbeitungs-Stufe 5 können dann auf vier Kanalwegen 11 die vorstehend genannten Daten für die vier Teilbilder weiterverarbeitet und über die im Prinzip vier Eingänge 13 der Kombinier-Stufe 3 wieder zu einem Gesamtbild zusammengefügt werden, die dann am System-Ausgang 14 anstehen.

Wie erwähnt, werden für die Datenverarbeitung in den vier Kanälen 11 der Datenverarbeitungs-Stufe 5, nämlich zur Verarbeitung der vier Sub-Bilder, hinlänglich bekannte Standard-Einheiten verwendet, die kostengünstig erhältlich sind und mit denen kleinere Datenmengen pro Bild vergleichsweise schnell und in hoher Qualität verarbeitet, zwischengespeichert etc. werden können.

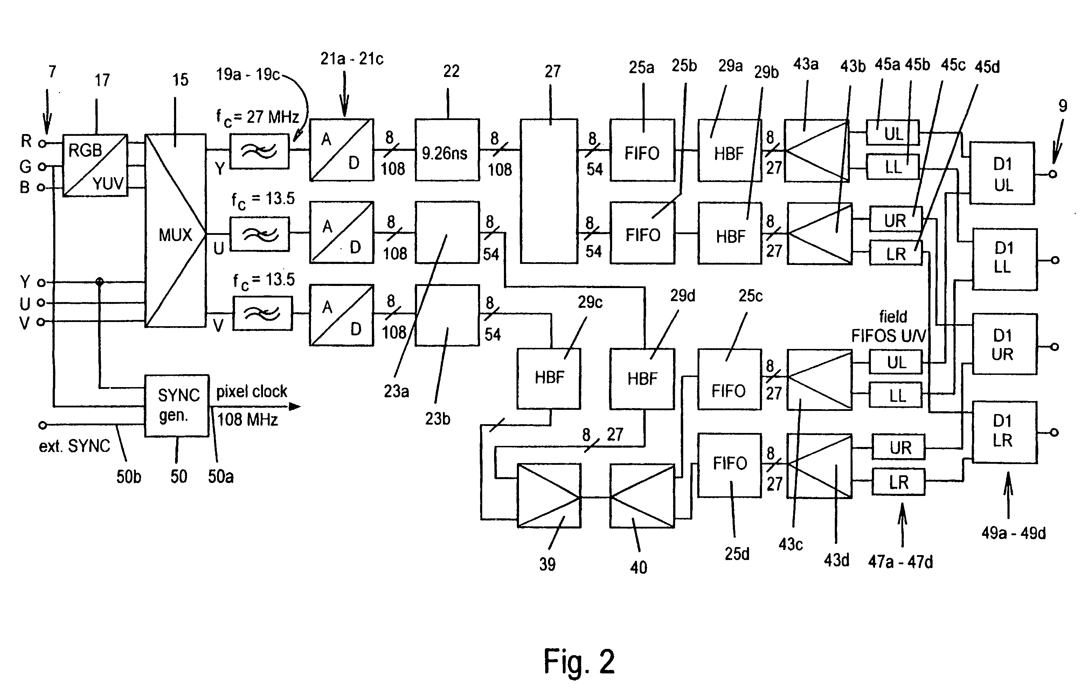

Der Aufbau der Separier-Stufe 1 wird nachfolgend anhand von Figur 2 im einzelnen näher erläutert. Das Blockdiagramm der Separier-Stufe 1 entsprechend Figur 2 ist für den Fall dargestellt, dass HDTV-Bilder in vier Sub-Bilder aufgeteilt werden sollen.

Für ein analoges HDTV-Eingangssignal kann zwischen einer RGB- und einer YUV-Darstellung gewählt werden. Digitale HDTV-Eingangssignale können ebenfalls verarbeitet werden. Die Umschaltung zwischen einer RGB- und einer YUV-Darstellung erfolgt mittels eines Mulitplexers MUX 15, wobei die von den RGB-Eingängen 7 kommenden Datensignale mit einer Matrix 17 in eine interne YUV-Repräsentation im Format 4:2:2 umgewandelt werden.

Die dadurch erhaltenen, den Bilddaten entsprechenden Signale werden nun in einem analogen Tiefpass 19a bis 19c gefiltert, wobei die Abschneidefrequenz für das Y-Signal 27 MHz und für das U- und das V-Signal 13,5 MHz ist.

Anschließend werden die drei analogen Signale mit einer Abtastrate von 108 MHz in drei Analog-Digital-Konvertern, nämlich den drei A/D-Konverter-Stufen 21a bis 21c mit einer Abtastrate von 108 MHz digitalisiert (zweifache Überabtastung).

Nach der Digitalisierung wird der Y-Kanal um einen Taktzyklus verzögert. Dazu ist die Verzögerung durch passende Abstimmung der passiven Bauelemente (Verzögerungsschaltung 22) so eingestellt, dass sie 9,26 nsec für das Y-Signal (entsprechend einem Zyklus der Taktrate von 108 MHz), und 18,52 nsec - also genau dem doppelten Betrag - für das U-und V-Signal beträgt. Damit lässt sich eine einfache und qualitativ exzellente digitale Kompensation realisieren. Bezüglich der U- und V-Daten wird in einer Taktreduzier-Stufe 23a und 23b die Taktrate auf die Hälfte, also von 108 MHz auf 54 MHz reduziert.

Für die weitere Verarbeitung werden nun die linken und rechten Hälften der Bildzeilen, also der Y-Daten, auf zwei Speicher, zwei sogenannte FIFOs 25a und 25b verteilt, und zwar mittels eines Liniendaten-Verteilers 27.

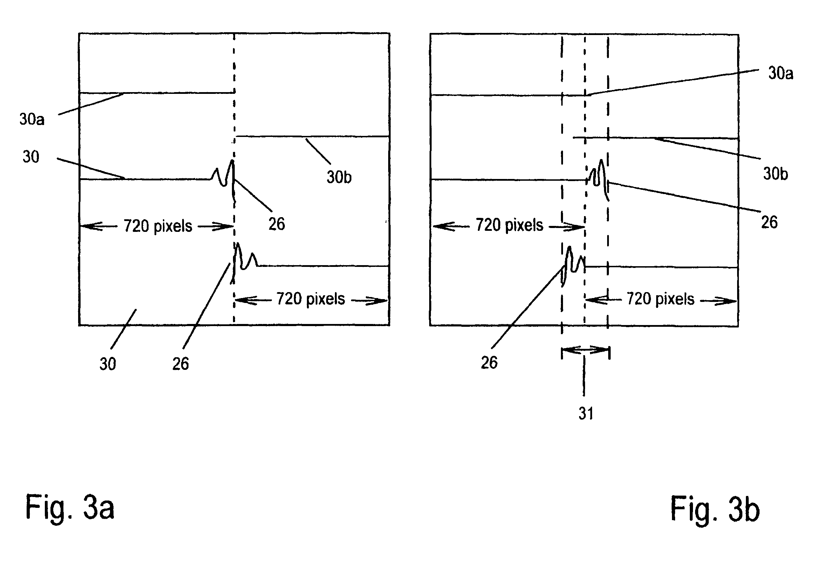

Die Pixelrate muss nun durch Halbband-Filter, beispielsweise Halbband-Filter 29a und 29b für die linken bzw. rechten Bilddaten (beispielsweise mittels FIR-Filter mit einstellbaren Koeffizienten) auf 27 MHz reduziert werden. Da bei hohen Qualitätsansprüchen eine Überabtastung erforderlich ist, ist die Pixelrate im Y-Kanal vor der Aufteilung in Halbzeilen für die Halbbandfilterung zu hoch; daher kann diese erst nach der Aufteilung in Halbzeilen erfolgen. An den Grenzen der gefilterten Bereiche bedingt die Impulsantwort des HB-Filters allerdings ein Einschwingverhalten, das ohne weitere Maßnahmen nach dem Zusammenfügen der Halbzeilen in der Zeilenmitte zu den bereits erwähnten Artefakten führen würde. Dies macht sich insbesondere bei homogenen Szenen und bei entsprechend ausgewählten Testbildern unangenehm bemerkbar (Figuren 3a und 3b).

Um diese Störungen zu eliminieren, wird gemäß dem erläuterten Ausführungsbeispiel über die Länge der Halbzeilen 30 des aufzuteilenden Bildes hinaus eine Überlappungszone 31 in den FIFOs 25 lokal mit abgespeichert und dementsprechend in die Filterung mit einbezogen. D.h., in der Überlappungszone 31 werden die Linien-Daten, beispielsweise für ein linkes (oberes oder unteres) Halbbild 30a und für ein rechtes (oberes oder unteres) Halbbild 30b doppelt abgespeichert, nämlich einmal zum linken Teilbildspeicher FIFOs 25a und zum anderen zum rechten Teilbildspeicher FIFOs 25b gehörend. Die durch das Einschwingverhalten des jeweiligen HB-Filters hevorgerufenen und zu Artefakten führenden Daten-Störungen 26 werden durch diese Maßnahmen in Bereiche außerhalb der Halbzeilendaten verschoben, die bei der weiteren Verarbeitung nicht benötigt werden.

Bei der weiteren nachfolgenden Bearbeitung oder Übertragung können diese überlappenden Daten abgeschnitten werden, so dass keine redundante Information anfällt.

In den Figuren 3a und 3b ist dies schematisch verdeutlicht. Würden, wie in Figur 3a wiedergegeben, die Zeilen exakt in der Mitte, d.h. die Daten bezüglich einer Zeile eines aufzuteilenden Bildes, aufgeteilt werden, also im Falle von HDTV-Bildern in jeweils 720 Pixel unterteilt werden, erscheinen in der Zeilenmitte durch das Einschwingverhalten des HB-Filters hervorgerufene Artefakte 26, die als Überschwingungen im unteren Teil der Figur 3a dargestellt sind.

Lässt man demgegenüber die Überlappungszone über die jeweilige Zeilenmitte hinaus in Richtung der jeweils anderen Halblinien-Daten der jeweils anderen Halbzeile hinauslaufen, so werden die durch das Einschwingverhalten des HB-Filters hervorgerufenen Störungen in Form von Artefakten 26 jeweils in einen unkritischen Bereich außerhalb der jeweiligen Halbzeile verschoben, wobei dieser Datenbereich für die Rekonstruktion des Bildes in der Kombinier-Stufe 3 später nicht wieder benötigt wird.

Da die 4:2:2 Signalkomponentenverarbeitung verwendet wird, kann für den U- und den V-Kanal die Pixelrate in den bereits erwähnten Taktreduzierstufen 23a und 23b auf 54 MHz verringert werden, bevor die Aufteilung in Halbband-Filter 25c und 25b für die linken und rechten Halbzeilen erfolgt.

Dementsprechend kann auch die Halbbandfilterung vor der Aufteilung in ein oberes und ein unteres Teilbild erfolgen, da die Pixelrate bereits niedrig genug ist.

Mit der Aufteilung der Y-Daten in Halbzeilen in dem Liniendaten-Verteiler 27 werden korrespondierende U- und V-Pixel, nachdem sie jeweils zugeordnete Halbband-Filter 29c und 29d durchlaufen haben, in einer Multiplexer-Stufe 39 zusammengefaßt, so dass ein gemeinsamer UV-Datenstrom mit derselben Pixelrate wie der Y-Datenstrom entsteht.

In einer nachfolgenden weiteren Multiplexer-Stufe 40 wird der gemeinsame UV-Datenstrom in zwei Zwischenspeichern 25c und 25d für die linken Halbbild-Zeilendaten und die rechten Halbbild-Zeilendaten zwischengespeichert.

Im nächsten Schritt erfolgt nunmehr die Aufteilung der Halbzeilen-Bilddaten in Halbzeilen-Bilddaten für die obere und untere Bildhälfte, und zwar durch Multiplexen der Y-und der UV-Datenströme. Dazu ist zum einen eine Multiplexer-Stufe 43a vorgesehen, in welcher die Y-Daten des linken Teilbildes im Zwischenspeicher 45a und 45b in ein oberes linkes und ein unteres linkes Teilbild aufgespalten werden. Entsprechend ist eine weitere Multiplexer-Stufe 43b dem Halbbildfilter 29b nachgeordnet, worüber die rechten Teilbilddaten im Zwischenspeicher 45c und 45d nachgeschaltet und die rechten Teilbilddaten in einem Zwischenspeicher für die oberen rechten bzw. die unteren rechten Teilbilddaten zwischengespeichert werden.

Entsprechend werden in Zwischenspeichern 47a bis 47d die UV-Datenströme mittels der Multiplexer 43c und 43d im Zwischenspeicher für die linken oberen und linken unteren sowie rechten oberen und rechten unteren Teilbilddaten zwischengespeichert. Die erwähnten Zwischenspeicher 45a bis 47d bestehen bevorzugt aus den sogenannten FIFOs. Dieser Zwischenspeicher erlaubt ein bezüglich des Eingangssignals asynchrones Auslesen der Bildinformation, womit auch eine Bildratenkonvertierung ermöglicht wird. Damit ist das ursprüngliche HDTV-Bild in vier gleichgroße Quadranten aufgeteilt, die Standard-Videobildern entsprechen.

Schließlich werden die FIFOs 45a bis 47d simultan ausgelesen und die korrespondierenden Y-, U- und V-Daten werden in vier digitale Datenströme (hier gemäß dem D1-Standard DSC270) konvertiert, nämlich in den sogenannten Konversionsstufen 49a bis 49d. In prinzipiell derselben Weise können auch andere hochauflösende Video-Standards verarbeitet werden. Es sind lediglich die genannten Abtastfrequenzen anzupassen.

Den in Figur 2 wiedergegebenen Ausgängen 9 folgen dann die Eingänge für die Datenverarbeitungs-Stufe 5 für die Standard-Verarbeitung der vier Sub-Bilder entsprechend Figur 1.

Die gesamte Separierstufe 1 wird mittels eines Sync-Generators 50 gesteuert, die über einen Pixel-Clock-Ausgang 50a verfügt. Zusätzlich kann von interner auf externe Synchronisation umgeschaltet werden, wozu eine Generator-Lock-Möglichkeit mit einem externen Referenzeingang 50b zur Verfügung steht. Der Eingang des Separierers läuft somit synchron mit dem Video-Eingangssignal, der Ausgang kann dagegen mit einer beliebigen externen Referenz synchronisiert werden. Neben der Möglichkeit zur externen Synchronisation erlaubt diese Technik auch eine Bildraten-Konversion.

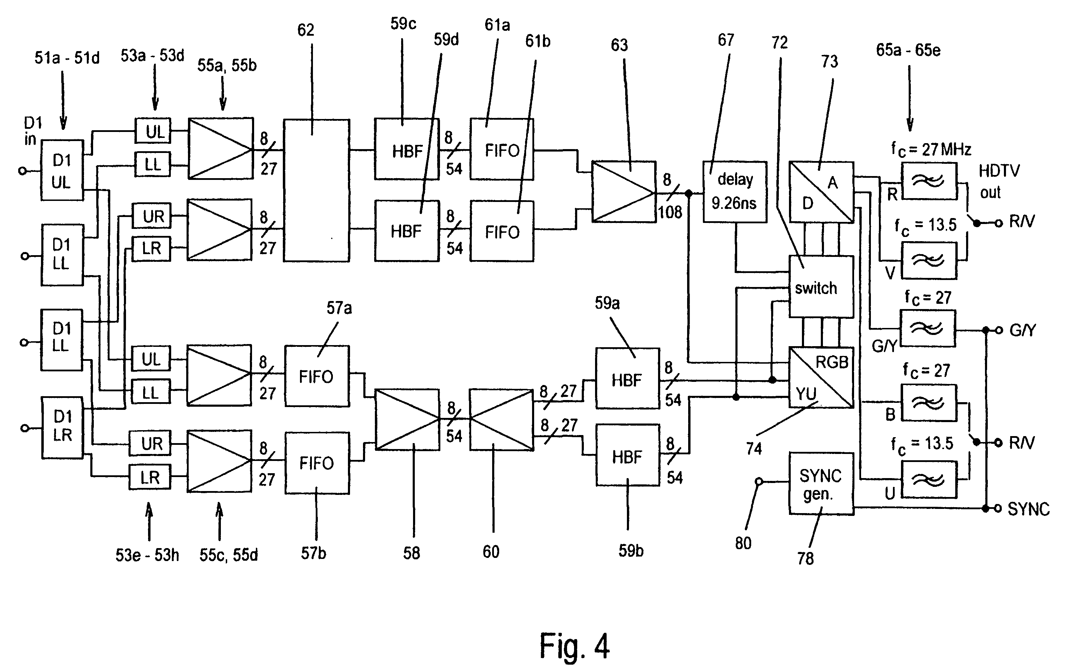

Nachfolgend wird auf Figur 4 Bezug genommen, in welcher das Blockdiagramm der Kombinier-Stufe 3 in größerem Detail wiedergegeben ist.

Im ersten Schritt werden die vier seriellen digitalen Datenströme simultan zu 8 Bit parallel konvertiert, und zwar in Konversionsstufen 51a bis 51d, und anschließend in jeweils vier FIFO-Bänke 53a bis 53d für das Y-Signal bzw. 53e bis 53h für das UV-Signal übertragen.

Da die FIFOs zur Unterstützung einer Fremdsynchronisation und Bildratenkonvertierung asynchron ausgelesen werden können, ist ein Ausgleich von Unterschieden im Timing der vier Kanäle möglich. Danach werden die oberen und die unteren Bildhälften für den Y- und UV-Kanal mit Hilfe von Multiplexern aus den jeweils vier Datenströmen rekombiniert, wozu die Multiplexer MUX 55a bis 55d in Figur 4 vorgesehen sind.

Die Verarbeitung der UV-Information geschieht dann derart, dass die rechten und linken Halbzeilen der oberen und unteren Teilbild-Datenströme mit den Multiplexern 55c, 55d zusammengefügt werden, und die so zusammengefügten UV-Daten für das linke Halbbild in einem Zwischenspeicher 57a und 57b für die linken bzw. rechten Halbbild-Daten zwischengespeichert werden. Über eine nachfolgende Multiplexer-Stufe 58 können dann diese Halbzeilen-Bilddaten für das linke und rechte Halbbild nochmals zusammengefaßt und über eine weitere nachfolgende Multiplexer-Stufe 60 den Halbband-Filtern HBF 59a und 59b zugeführt werden. Dabei werden die U- und die V-Kanäle einzeln unter Verwendung der erwähnten Halbbandfilter HBF 59a und 59b auf 54 MHz hochkonvertiert.

Im Y-Kanal muss wegen der im Vergleich zum U- bzw. V-Kanal doppelt so hohen Taktrate die Halbbandfilterung vor dem Rekombinieren der linken und rechten Halbzeilen erfolgen. Dazu sind Halbbandfilter 59c und 59d vorgesehen, die einem Liniendaten-Verteiler 62, an dessen Eingangsseite die beiden Ausgänge der vorgeschalteten Multiplexer-Stufe 55a und 55b angeschlossen sind, vorgeschaltet sind.

Ähnlich wie im Falle des Separierers müssen auch hier die Halbzeilen in dem Liniendaten-Verteiler 62 etwas überlappend gefiltert werden, damit die Störungen in Bereiche jenseits der Zeilenmitten, also jeweils außerhalb des letztlich benötigten Halbzeilen-Datenstromes, verlagert werden. Zur Realisierung der Überlappungszone wird jeweils der angrenzende Teil der entsprechenden Bildzeile des horizontal benachbarten Teilbildes verwendet. Erst danach werden die beiden Halbzeilen jeweils in eine Zwischenspeicherbank 61a bzw. 61b (sogenannte FIFOs-Bänke) für die linke sowie die rechte Halbzeile geschrieben und anschließend zu vollen HDTV-Zeilen mit 1.440 Pixeln rekombiniert, und zwar mittels einer links-rechts-MUX 63, also einer Multiplexerstufe.

Als Ausgänge stehen RGB- oder YUV-Ausgänge zur Verfügung. Dabei wird die Bandbreite der R-, G- und B-Signale mit identischen analogen Tiefpassfiltern 65a bis 65e begrenzt. Die Umschaltung von RGB- auf YUV-Signale und umgekehrt erfolgt über einen Schaltkreis 72, dem die YUV-Signale entweder direkt oder über eine Matrix 74 in Form der RGB-Signale zuführbar sind. Für die Luminanz- und Chrominanz-Kanäle werden, wie schon im Falle des Separierers, der Luminanz-Kanal um einen Zyklus von 9,26 nsec verzögert und die Chrominanz-Kanäle um genau den doppelten Betrag, also 18,52 nsec, wozu eine digitale Verzögerungsstufe 67 in Verbindung mit den Filtern 65a bis 65e vorgesehen ist. Wie schon im Falle des Separierers ist dadurch eine einfache und qualitativ hochwertige Kompensation der Verzögerungsdifferenz zwischen Luminanz und Chrominanz realisiert. Zur Anpassung an unterschiedliche System-Delays besteht im Kombinierer die Möglichkeit, die Bilder horizontal nach links oder rechts um einige Pixel zu verschieben. Für die Steuerung wird ein Polynomzähler verwendet.

Die Bilddaten werden dann in einem Digital-Analog-Konverter 73 gewandelt. Anschließend werden die analogen Ausgangsdaten im RGB-Format oder im YUV-Format den erwähnten analogen Tiefpassfiltern 65a bis 65e zugeführt.

Zusätzlich kann von interner auf externe Synchronisation umgeschaltet werden, wozu eine Generator-Lock-Möglichkeit 78 mit einem externen HD Referenzeingang 80 zur Verfügung steht.

Die Vorrichtung ist am Beispiel von HDTV-Videobildern erläutert worden. Prinzipiell können aber in gleicher Weise auch andere hochauflösende Video-Standards verarbeitet werden. Es sind lediglich die genannten Frequenzen und Speicherformate anzupassen.

Ebenso ist durch Verteilung der Daten auf weitere Kanäle eine Aufspaltung in mehr als vier Kanäle ohne weiteres möglich.

## Patentansprüche

1. Vorrichtung zur Aufteilung von datenmäßig erfassten Bildern in mehrere Teilbilder (UL,UR,LR,LL) in einer Separier-Stufe (1) und/oder zur Rekombination mehrere Teilbilder in einer kombinier-Stufe (3), mit einer zwischen der Sepärierund der Kombinier-Stufe (1, 3) vorgesehenen Datenverarbeitungs-Stufe (5) zur Bilddatenbe- und -verarbeitung, mit folgenden weiteren Merkmalen
- in der Separier-Stufe (1) wird der eingangsseitig der Separier-Stufe (1) zugeführte Datenstrom in mehrere Teildatenströme aufgeteilt und diese werden in der Kombinier-Stufe (3) wieder zu einem Datenstrom zusammengefügt,
- in der Separier-Stufe (1) und/oder in der Kombinier-Stufe (3) sind den Teildatenströmen entsprechende Teildaten-Speicher (25a bis 25d; 57a, 57b, 61a, 61b) zugeordnet, und
- die in dem Teildatenspeichern zwischengespeicherten Teildatenströme umfassen zur Vermeidung oder Verringerung von Artefakten bei der Rekombination der Teilbilder auch redundant zwischengespeicherte Dateninformationen bezüglich zumindest eines angrenzenden Teilbildes,
**gekennzeichnet durch** die folgenden weiteren Merkmale
- die Verarbeitung der Bilder erfolgt anhand einer YUV-Repräsentation im Format 4:2:2, entsprechend dem Y-, U- und V-Kanal,
- für die Teildatenströme des Y-, U- und V-Kanals einschließlich der redundanten Dateninformatianen ist jeweils ein eigener Teildatenspeicher vorgesehen,
- in der Separier-Stufe
- ist (1) eine Pixelreduktion für den U-, den V- sowie den Y-Kanal vorgesehen,
- ist für den U- und den V-Kanal eine Taktreduzierungs-Stufe (23a, 23b) vorgesehen,
- sind dieser Taktreduzierungs-Stufe (23a, 23b) nachgeordnet Band-Filter (29c, 29d) in welchen die Pixelrate des U-und V-Kanals nochmals reduziert wird,
- wird die Pixelrate der Y-Daten in einem Teilbildspeicher (25a, 25b) zwischengespeichert, bevor sie in einem nachgeordneten Band-Filter (29a, 29b) auf eine niedrigere Tatkfrequenz reduziert wird, derart, dass die Taktrate des Datenstroms in Y-Kanal gleich ist der Taktrate des Datenstroms im U- und im V-Kanal.

2. Vorrichtung nach Anspruch 1, **dadurch gekennzeichnet, dass** der Datenstrom bezüglich des Y-Kanals zunächst einem Liniendaten-Verteiler (27) Zugefürt wird, an dessen Ausgang der Datenstrom des Y-Kanals mit einer reduzierten Pixelrate ansteht, bevor der Datenstrom den nachgeordneten Teilbildspeichern (25a, 25b) Zugefürt wird.

3. Vorrichtung nach Anspruch 1 oder 2, **dadurch gekennzeichnet, dass** die Zeilendaten zweier nebeneinanderliegender Teilbilder sich in einem Überlappungsbereich. (31) überschneiden.

4. Vorrichtung nach einem der Ansprüche 1 bis 3, **dadurch gekennzeichnet, dass** in der Separier-Stufe (3) dem Linien-datenverteiler (27) entsprechend der halben Anzahl der Teildatenbilder Zwischenspeicherdatenbänke (25a, 25b) nachgeordnet sind.

5. Vorrichtung nach Anspruch 1 bis 4, **dadurch gekennzeichnet, dass** in der Separier-Stufe (3) zur Aufspaltung der Liniendaten des Y-Kanals in Teilbilder den Zwischenspeicherdatenbänken (25a,25b) ein Liniendaten-Verteiler (27) vorgeschaltet ist.

6. Vorrichtung nach einem der Ansprüche 1 bis 5, **dadurch gekennzeichnet, dass** zur Erzeugung einer Qualitätsverbesserung eine Überabtastung des Eingangsbildes vor der A/D-Konversion vorgesehen ist.

7. Vorrichtung nach einem der Ansprüche 1 bis 6, **dadurch gekennzeichnet, dass** in der Kombinier-Stufe (3) bei der Rekombination der Teildatenbilder zu einem Gesamtbild die in einem Überlappungsbereich (31) redundant abgespeicherten Daten so verarbeitet werden, dass sie in dem einer Störung der Bilddaten durch die Filterung näherliegenden Teilbereich unterdrückt oder weggelassen werden.

8. Vorrichtung nach einem der Anspruch 7, **dadurch gekennzeichnet, dass** dem Teildatenstram des Y-Kanals nach einer Zeilendaten-Verteilerstufe (62) in der Kombinier-Stufe (3) Halbband-Filterstufen (59c, 59d) nachgeordnet sind.

9. Vorrichtung nach einem der Ansprüche 1 bis 8, **dadurch gekennzeichnet, dass** bei einer bandbegrenzenden Filterung der Teildatenströme des Y-, U-und V Kanals ein Verzögerungsfaktor derart einstellbar ist, dass die Differenz zwischen den Verzögerungszeiten des Teildatenströme des Y- und UV-Datenverarbeitungs-Kanals einem ganzzahligen Vielfachen der Taktfrequenz entspricht.

10. Vorrichtung nach einem der Ansprüche 1 bis 9, **dadurch gekennzeichnet, dass** in der Separier- und/oder kombinier-Stufe (1, 3) ein asynchrones Auslesen der Speicherbänke in Verbindung mit internen oder externen Synchronisations-Signalen durchgeführt wird.

## Claims

1. Apparatus for splitting images, which are recorded in the form of data, into a number of image elements (UL, UR, LR, LL) in a separation stage (1), and/or for recombination of a number of image elements in a combiner stage (3), having a data processing stage (5), which is provided between the separation stage (1) and the combiner stage (3), for image data processing, and having the following further features
- the data stream which is supplied to the input side of the separation stage (1) is split in the separation stage (1) into a number of data element streams, and these are joined together in the combiner stage (3) again to form a data stream,
- data element memories (25a to 25d; 57a, 57b, 61a, 61b) which correspond to the data element streams are allocated in the separation stage (1) and/or in the combiner stage (3), and
- the data element streams which are buffer-stored in the data element memories also comprise data information, which is buffer-stored in a redundant manner, relating to at least one adjacent image element, in order to avoid or reduce artefacts in the recombination of the image elements,
**characterized by** the following further features:
- the images are processed on the basis of a YUV representation in the 4:2:2 format, corresponding to the Y, U and V channels,
- a specific data element memory is provided for each of the data element streams for the Y, U and V channels including the redundant data information,
- in the separation stage (1):
- pixel reduction is provided for the U, V and Y channels,
- a clock reduction stage (23a, 23b) is provided for the U and V channels,
- this clock reduction stage (23a, 23b) is followed by band filters (29c, 29d) in which the pixel rate of the U and V channels is reduced once again,
- the pixel rate of the Y data is buffer-stored in an image element memory (25a, 25b) before it is reduced to a lower clock frequency in a downstream band filter (29a, 29b), such that the clock rate of the data stream in the Y channel is equal to the clock rate of the data stream in the U and V channels.

2. Apparatus according to Claim 1, **characterized in that** for the Y channel, the data stream is first of all supplied to a line data distributor (27) at whose output the data stream for the Y channel is produced at a reduced pixel rate, before the data stream is supplied to the downstream image element memories (25a, 25b).

3. Apparatus according to Claim 1 or 2, **characterized in that** the line data items for two image elements which are located alongside one another intersect in an overlapping area (31).

4. Apparatus according to one of Claims 1 to 3,
**characterized in that**, in the separation stage (3), the line data distributor (27) is followed by buffer-store databanks (25a, 25b) corresponding to half the number of data image elements.

5. Apparatus according to Claims 1 to 4, **characterized in that**, in the separation stage (3) a line data distributor (27) is connected upstream of the buffer-store data banks (25a, 25b) in order to split the line data in the Y channel into image elements.

6. Apparatus according to one of Claims 1 to 5, **characterized in that** oversampling of the input image is provided before the A/D conversion in order to produce a quality improvement.

7. Apparatus according to one of Claims 1 to 6, **characterized in that**, during the recombination of the data image elements in the combiner stage (3) in order to form an overall image, the data which is stored in a redundant manner in an overlapping area (31) is processed such that it is suppressed or omitted in the area element which is located closer to any interference in the image data, by means of filtering.

8. Apparatus according to Claim 7, **characterized in that**, following a line data distribution stage (62) in the combiner stage (3) the data element stream in the Y channel is followed by half-band filter stages (59c, 59d).

9. Apparatus according to one of Claims 1 to 8, **characterized in that**, in the case of band-limiting filtering of the data element streams in the Y, U and V channels, a delay factor can be adjusted such that the difference between the delay times for the data element streams for the Y and UV data processing channels corresponds to an integer multiple of the clock frequency.

10. Apparatus according to one of Claims 1 to 9, **characterized in that**, the memory banks are read asynchronously, in conjunction with internal or external synchronization signals, in the separation and/or combiner stage (1, 3).

## Revendications

1. Dispositif pour diviser des images saisies - sur le plan des données-en plusieurs images partielles (UL, UR, LR, LL) dans un étage de séparation (1) et/ou pour recombiner plusieurs images partielles dans un étage de combinaison (3), comprenant un étage de traitement de données (5), prévu entre l'étage de séparation (1) et l'étage de combinaison (3), pour le traitement et l'édition des données d'images, et présentant les éléments suivants :
- dans l'étage de séparation (1), le flux de données amené du côté entrée de l'étage de séparation (1) est subdivisé en plusieurs flux de données partiels et ceux-ci sont à nouveau groupés dans l'étage de combinaison (3) pour former un flux de données ;
- dans l'étage de séparation (1) et/ou l'étage de combinaison (3), des mémoires correspondantes de données partielles (25a à 35d ; 57a, 57b, 61a, 61 b) sont associées aux flux de données partiels ; et
- les flux de données partiels mémorisés de manière intermédiaire dans les mémoires de données partielles comprennent aussi, pour éviter ou pour diminuer des artefacts lors de la recombinaison des images partielles, des informations de données mémorisées de manière intermédiaire avec redondance au sujet d'au moins une image partielle adjacente ;
**caractérisé par** les autres caractéristiques suivantes :
- le traitement des images a lieu selon une représentation YUV dans le format 4:2:2, conformément au canal Y, au canal U et au canal V ;
- une propre mémoire de données partielles est prévue respectivement pour les flux de données partiels du canal Y, du canal U et du canal V, y compris les informations de données redondantes ;
- dans l'étage de séparation (1), il est prévu :
- une réduction de pixels pour le canal U, le canal V ainsi que le canal Y ;
- un étage de réduction de cadence (23a, 23b) pour les canaux U et V ;
- des filtres à bande (29c, 29d), dans lesquels le débit de pixels du canal U et du canal V est à nouveau réduit, agencés en aval de ces étages de réduction de cadence (23a, 23b) ; et
- le débit de pixels des données Y est mémorisé de manière intermédiaire dans une mémoire d'images partielle (25a, 25b) avant d'être réduit à une fréquence de cadence plus basse dans un filtre à bande (29a, 29b) agencé en aval, de sorte que la cadence du flux de données dans le canal Y est égales à la cadence du flux de données dans le canal U et le canal V.

2. Dispositif selon la revendication 1, **caractérisé en ce que** le flux de données concernant le canal Y est amené tout d'abord vers un répartiteur de données linéaires (27), à la sortie duquel le flux de données du canal Y se présente avec un débit de pixels réduit, avant que le flux de données soit amené vers les mémoires d'images partielles (25a, 25b) agencées en aval.

3. Dispositif selon l'une ou l'autre des revendications 1 et 2, **caractérisé en ce que** les données de ligne de deux images partielles placées l'une à côté de l'autre se recoupent dans une zone de chevauchement (31).

4. Dispositif selon l'une des revendications 1 à 3, **caractérisé en ce que**, dans l'étage de séparation (1), des bases de données à mémoire intermédiaire (25a, 25b) sont agencées en aval du répartiteur de données linéaires (27), en correspondance de la moitié du nombre d'images de données partielles.

5. Dispositif selon l'une des revendications 1 à 4, **caractérisé en ce que**, dans l'étage de séparation (1), un répartiteur de données linéaires (27) est agencé en amont des bases de données à mémoire intermédiaire (25a, 25b) pour séparer les données linéaires du canal Y en images partielles.

6. Dispositif selon l'une des revendications 1 à 5, **caractérisé en ce qu'**il est prévu un sur-balayage de l'image d'entrée avant la conversion analogique/numérique pour obtenir une amélioration de la qualité.

7. Dispositif selon l'une des revendications 1 à 6, **caractérisé en ce que**, dans l'étage de combinaison (3), lors de la recombinaison des données d'images partielles en une image globale, les données, mémorisées de manière redondante dans une zone de chevauchement (31), sont traitées de manière à être supprimées ou omises dans une zone partielle plus proche d'une perturbation des données d'images due à la filtration.

8. Dispositif selon la revendication 7, **caractérisé en ce que** des étages de filtres à demi-bande (59c, 59d) sont agencés en aval du flux de données partiels du canal Y, après un étage de répartiteur des données de ligne (62), dans l'étage de combinaison (3).

9. Dispositif selon l'une des revendications 1 à 8, **caractérisé en ce que**, lors d'un filtrage à limitation de bande des flux de données partiels du canal Y, du canal U et du canal V, il est possible d'ajuster un facteur de retardement de sorte que la différence entre les temps de retardement des flux de données partiels dans les canaux de traitement des données Y et UV correspond à un multiple entier de la fréquence de cadence.

10. Dispositif selon l'une des revendications 1 à 9, **caractérisé en ce que**, dans l'étage de séparation (1) et/ou l'étage de combinaison (3), une lecture asynchrone des bancs de mémoire est exécutée en liaison avec des signaux de synchronisation internes ou externes.
